# EUROPÄISCHE PATENTANMELDUNG

(11) **EP 4 692 565 A1**
(43) Veröffentlichungstag der Anmeldung: **11.02.2026**
(21) Anmeldenummer: 25193187.9
(22) Anmeldetag: 31.07.2025
(51) Int. Cl.: F15B 11/00, F15B 21/08, F15B 13/043, F15B 13/044

(54) **VENTILSYSTEM UND VERFAHREN ZUM BETREIBEN EINES PNEUMATISCHEN AKTORS**

(30) Priorität: 06.08.2024 DE 102024122350
(71) Anmelder: Festo SE & Co. KG, 73734 Esslingen (DE)
(72) Erfinder: Klassen, Daniel, 73734 Esslingen (DE); Dämmer, Dr. Gabriel, 73728 Esslingen (DE); Klosok, Martin, 71336 Waiblingen (DE)
(74) Vertreter: Patentanwälte Magenbauer & Kollegen Partnerschaft mbB

(57) **Zusammenfassung**

Die Erfindung betrifft ein Ventilsystem (21; 71) zur Versorgung eines pneumatischen Aktors (2; 52), mit einem Versorgungsanschluss (22; 72), einem Abluftanschluss (23; 73), einem ersten Arbeitsanschluss (24; 74), dem ein erster Drucksensor (43; 63) zugeordnet ist, und einem zweiten Arbeitsanschluss (25; 75), dem ein zweiter Drucksensor (44; 64) zugeordnet ist, sowie mit einer ersten Ventilgruppe (31; 81) und mit einer zweiten Ventilgruppe (32; 82), sowie mit einer Steuereinrichtung (28; 78), die zur Auswertung eines ersten Drucksignals des ersten Drucksensors (43; 63) ausgebildet ist und einen ersten Druckregler zur Ansteuerung der ersten Ventilgruppe (31; 81) aufweist und die zur Auswertung eines zweiten Drucksignals des zweiten Drucksensors (44; 64) ausgebildet ist und einen zweiten Druckregler zur Ansteuerung der zweiten Ventilgruppe (32; 82) aufweist und die für eine Einstellung eines ersten Maximaldruckniveaus für den ersten Druckregler und eines zweiten Maximaldruckniveaus für den zweiten Druckregler ausgebildet ist.

## Beschreibung

Die Erfindung betrifft ein Ventilsystem und ein Verfahren zum Betreiben eines pneumatischen Aktors.

Die EP 2 644 904 B1 offenbart ein Verfahren zur Ansteuerung eines fluidisch betreibbaren Arbeitssystems, das einen Aktor mit einem Aktorgehäuse und einem im Aktorgehäuse beweglich aufgenommenen Aktorglied aufweist, die eine erste und mindestens eine zweite Arbeitskammer bestimmen, die zur Bereitstellung von einander entgegengesetzt wirkenden Aktorkräfte auf das Aktorglied ausgebildet sind, und das eine Ventileinrichtung, die zur separaten Ansteuerung der beiden Arbeitskammern ausgebildet ist, sowie eine Steuereinrichtung aufweist, wobei vorgesehen ist, dass die Steuereinrichtung die folgenden Schritte vorgibt: Bereitstellung eines ersten vorgebbaren Volumens eines druckbeaufschlagten Fluids an die erste Arbeitskammer, um das Aktorglied ausgehend von einer Startposition auf eine vorgebbare Zielgeschwindigkeit zu beschleunigen, Verschließen der ersten Arbeitskammer, Freigeben eines Abströmens eines zweiten vorgebbaren Volumens eines in der zweiten Arbeitskammer enthaltenen Fluids aus der zweiten Arbeitskammer, so dass eine Abbremsung des Aktorglieds auf eine vorgebbare Zielposition gewährleistet ist.

Die Aufgabe der Erfindung besteht darin, ein Ventilsystem und ein Verfahren zum Betreiben eines pneumatischen Aktors bereitzustellen, mit denen eine Anpassung an unterschiedliche Bewegungsaufgaben, die von einem Aktor zu bewältigen sind, gewährleistet werden kann.

Gemäß einem ersten Erfindungsaspekt wird diese Aufgabe für ein Ventilsystem zur Versorgung eines pneumatischen Aktors mit den folgenden Merkmalen gelöst: das Ventilsystem umfasst einen Versorgungsanschluss, einen Abluftanschluss, einen ersten Arbeitsanschluss, dem ein erster Drucksensor zugeordnet ist, und einen zweiten Arbeitsanschluss, dem ein zweiter Drucksensor zugeordnet ist, sowie mit eine erste Ventilgruppe, die mit dem Versorgungsanschluss und mit dem Abluftanschluss und mit dem ersten Arbeitsanschluss verbunden ist und die in einem ersten Funktionszustand einen Abluftpfad zwischen dem ersten Arbeitsanschluss und dem Abluftanschluss freigibt und die in einem zweiten Funktionszustand einen Versorgungspfad zwischen dem Versorgungsanschluss und dem ersten Arbeitsanschluss freigibt, und eine zweite Ventilgruppe, die mit dem Versorgungsanschluss und mit dem Abluftanschluss und mit dem zweiten Arbeitsanschluss verbunden ist und die in einem ersten Funktionszustand einen Abluftpfad zwischen dem ersten Arbeitsanschluss und dem Abluftanschluss freigibt und die in einem zweiten Funktionszustand einen Versorgungspfad zwischen dem Versorgungsanschluss und dem zweiten Arbeitsanschluss freigibt, sowie eine Steuereinrichtung, die zur Auswertung eines ersten Drucksignals des ersten Drucksensors ausgebildet ist und einen ersten Druckregler zur Ansteuerung der ersten Ventilgruppe aufweist und die zur Auswertung eines zweiten Drucksignals des zweiten Drucksensors ausgebildet ist und einen zweiten Druckregler zur Ansteuerung der zweiten Ventilgruppe aufweist und die für eine Einstellung eines ersten Maximaldruckniveaus für den ersten Druckregler und eines zweiten Maximaldruckniveaus für den zweiten Druckregler ausgebildet ist.

Das Ventilsystem kann aus mehreren eigenständigen Komponenten zusammengesetzt sein, die jeweils ein eigenes Gehäuse aufweisen und jeweils für sich betrieben werden können. Hierbei kann vorgesehen sein, dass der erste Drucksensor, die erste Ventilgruppe, der zweite Drucksensor, die zweite Ventilgruppe und die Steuereinrichtung durch Fluidschläuche und eine elektrische Verkabelung fluidisch und elektrisch miteinander verbunden sind und jede der Komponenten einzeln ausgetauscht werden kann. Alternativ ist vorgesehen, dass der erste Drucksensor, die erste Ventilgruppe, der zweite Drucksensor, die zweite Ventilgruppe und die Steuereinrichtung in einem gemeinsamen Gehäuse untergebracht sind, in dem auch Fluidkanäle und elektrische Leitungen integriert sein können, womit eine kompakte Bauweise für das Ventilsystem erzielt werden kann.

Die fluidischen Anschlüsse des Ventilsystems, insbesondere der Versorgungsanschluss, der erste Arbeitsanschluss und der zweite Arbeitsanschluss, können als Schlauchkupplungen ausgebildet sein, an denen beispielsweise flexible Fluidschläuche angeschlossen werden können. Bei einem bestimmungsgemäßen Gebrauch des Ventilsystems sind fluidisch kommunizierende Verbindungen zwischen dem Versorgungsanschluss und einer Fluidquelle, insbesondere einer Druckluftquelle, zwischen dem ersten Arbeitsanschluss und einem ersten Fluidanschluss eines Aktors sowie zwischen dem zweiten Arbeitsanschluss und einem zweiten Fluidanschluss des Aktors vorgesehen. Ferner ist eine elektrische Versorgung der Steuereinrichtung vorgesehen, die ihrerseits zur elektrischen Ansteuerung der ersten Ventilgruppe und der zweiten Ventilgruppe ausgebildet ist. Der Abluftanschluss kann ebenfalls als Schlauchkupplung ausgebildet sein, um die vom Aktor bereitgestellte Abluft beispielsweise an einen zentralen Abluftkanal weiterzuleiten. Alternativ kann es sich bei dem Abluftanschluss um eine Mündungsöffnung handeln, aus der die Abluft in die Umgebung des Ventilsystems abströmen kann. Bevorzugt ist vorgesehen, dass dem Abluftanschluss ein Schalldämpfer zugeordnet ist, mit dem eine Schalldämpfung für die Abluft vorgenommen werden kann, bevor diese in die Umgebung des Ventilsystems abströmt.

Bei dem Aktor kann es sich um einen Pneumatikzylinder handeln, der für eine Bereitstellung einer linearen Bewegung längs eines geradlinigen Bewegungswegs ausgebildet ist und der einen linearbeweglich in einer Aktorausnehmung eines auch als Zylinder bezeichneten Aktorgehäuses aufgenommenen Arbeitskolben aufweist. Wahlweise ist der Pneumatikzylinder mit oder ohne Kolbenstange ausgeführt.

Alternativ kann es sich beim Aktor um einen pneumatischen Schwenkantrieb zur Bereitstellung einer Schwenkbewegung um eine Schwenkachse handeln, bei dem ein als Schwenkflügel bezeichneter Arbeitskolben schwenkbeweglich längs eines kreisabschnittsförmigen Bewegungswegs in einer Aktorausnehmung eines Aktorgehäuses aufgenommen ist.

Unabhängig von der Ausgestaltung des Aktors ist stets vorgesehen, dass der Arbeitskolben die Aktorausnehmung in einen ersten größenvariablen Arbeitsraum und einen zweiten größenvariablen Arbeitsraum unterteilt. Hierbei weist der erste Arbeitsraum einen ersten Fluidanschluss auf, durch den eine Belüftung und Entlüftung des ersten Arbeitsraums vorgenommen werden kann. Ferner weist der zweite Arbeitsraum einen zweiten Fluidanschluss auf, durch den eine Belüftung und Entlüftung des zweiten Arbeitsraums vorgenommen werden kann.

Die erste Ventilgruppe ist fluidisch mit dem Versorgungsanschluss, mit dem ersten Arbeitsanschluss und mit dem Abluftanschluss verbunden. Die erste Ventilgruppe ist derart eingerichtet, dass sie in einem ersten Funktionszustand eine als Abluftpfad bezeichnete, fluidisch kommunizierende Verbindung zwischen dem ersten Arbeitsanschluss und dem Abluftanschluss zur Entlüftung (Druckreduzierung) des ersten Arbeitsraums des Aktors herstellen kann. Ferner ist die erste Ventilgruppe derart eingerichtet, dass sie in einem zweiten Funktionszustand eine als Versorgungspfad bezeichnete, fluidisch kommunizierende Verbindung zwischen dem Versorgungsanschluss und dem ersten Arbeitsanschluss für eine Belüftung (Druckerhöhung) des ersten Arbeitsraums herstellen kann.

Ferner ist die erste Ventilgruppe elektrisch mit der Steuereinrichtung verbunden, um elektrische Steuersignale der Steuereinrichtung zu empfangen und diese Steuersignale in Bewegungen wenigstens eines Ventilglieds der ersten Ventilgruppe umzusetzen. Beispielsweise kann vorgesehen sein, dass eine Umschaltung der ersten Ventilgruppe zwischen dem ersten Funktionszustand und dem zweiten Funktionszustand mit einem einzigen Ventilglied verwirklicht wird. Hierzu kann die erste Ventilgruppe beispielsweise als 3/2-Wegeventil oder als 3/3-Wegeventil ausgebildet sein. Alternativ kann die Umschaltung der ersten Fluidventilgruppe zwischen dem ersten Funktionszustand und dem zweiten Funktionszustand auch mit mehreren, insbesondere mit zwei, 2/2-Wegeventilen verwirklicht werden. Insbesondere ist vorgesehen, dass die erste und die zweite Ventilgruppe identisch ausgebildet sind.

Bevorzugt ist vorgesehen, dass die zweite Ventilgruppe den gleichen Aufbau wie die erste Ventilgruppe aufweist und lediglich anstelle einer Verbindung mit dem ersten Arbeitsanschluss eine Verbindung mit dem zweiten Arbeitsanschluss aufweist.

Der erste Drucksensor kann entweder direkt am ersten Arbeitsanschluss oder in einer Fluidleitung, insbesondere in einem Fluidschlauch, zwischen der ersten Ventilgruppe und dem ersten Arbeitsanschluss angeordnet sein. Der erste Drucksensor kann als Absolutdrucksensor oder als Relativdrucksensor ausgebildet sein und ist elektrisch mit der Steuereinrichtung verbunden, um ein erstes Drucksignal an die Steuereinrichtung bereitzustellen. Vorzugsweise ist der zweite Drucksensor in gleicher Weise ausgebildet wie der erste Drucksensor und ist dem zweiten Arbeitsanschluss zugeordnet. Gegebenenfalls kann vorgesehen sein, dass zumindest einer der Drucksensoren stromab des jeweiligen Arbeitsanschlusses, insbesondere am jeweiligen Fluidanschluss des Aktors, angeordnet ist.

Die Steuereinrichtung ist für eine Auswertung des ersten Drucksignals und des zweiten Drucksignals ausgebildet, um einen ersten Fluiddruck im ersten Arbeitsraum und einen zweiten Fluiddruck im zweiten Arbeitsraum zu ermitteln. Mit dem ersten Fluiddruck kann die Steuereinrichtung eine erste Druckregelung (closed loop control) für den ersten Arbeitsraum durchführen. Hierzu weist die Steuereinrichtung einen ersten Druckregler auf, bei dem es sich entweder um eine elektrische oder elektronische Schaltung als Bestandteil der Steuereinrichtung oder um ein Computerprogramm handeln kann, wobei das Computerprogramm in einem Mikroprozessor ausgeführt wird, bei dem es sich um eine Komponente der Steuereinrichtung handelt. In gleicher Weise kann die Steuereinrichtung mit dem zweiten Fluiddruck eine zweite Druckregelung (closed loop control) für den zweiten Arbeitsraum durchführen.

Für die erste Druckregelung berücksichtigt die Steuereinrichtung ein erstes Maximaldruckniveau, für die zweite Druckregelung berücksichtigt die Steuereinrichtung ein zweites Maximaldruckniveau. Dabei können das erste Maximaldruckniveau und das zweite Maximaldruckniveau identisch oder unterschiedlich sein.

Bevorzugt ist vorgesehen, dass die Steuereinrichtung einen internen Speicher für das erste und das zweite Maximaldruckniveau aufweist. Besonders bevorzugt ist vorgesehen, dass in dem internen Speicher unterschiedliche erste und zweite Maximaldruckniveaus, insbesondere Wertepaare von ersten und zweiten Maximaldruckniveaus, gespeichert sind. Die gespeicherten Maximaldruckniveaus kommen vorzugsweise dann zur Anwendung, wenn mit dem Aktor stets die gleiche Bewegungsaufgabe durchgeführt werden soll. In diesem Fall kann vorgesehen sein, dass die Maximaldruckniveaus für die Durchführung der Bewegungsaufgabe experimentell ermittelt wurden, wobei die experimentelle Ermittlung darauf ausgerichtet ist, die Bewegung des Aktors unter Berücksichtigung aller Rahmenbedingungen wie beispielsweise Positioniergeschwindigkeit, Positioniergenauigkeit, Aktorsteifigkeit sowie mit minimalem Energieeinsatz zu verwirklichen. Beispielhaft kann vorgesehen sein, dass ein Versorgungsdruck für den Aktor während der Ermittlung der Maximaldruckniveaus in kleinen Schritten abgesenkt wird, bis die Bewegungsaufgabe mit ihren Rahmenbedingungen gerade noch erfüllt wird. Die hierbei individuell für die beiden Arbeitsräume benötigten Arbeitsdrücke werden dann als erstes bzw. zweites Maximaldruckniveau gespeichert.

Alternativ ist vorgesehen, dass die Steuereinrichtung das erste und das zweite Maximaldruckniveau aus einer Bewegungsaufgabe bestimmt, die entweder in der Steuereinrichtung gespeichert ist oder von einer übergeordneten Steuerung an die Steuereinrichtung bereitgestellt wird. Die Bewegungsaufgabe kann beispielsweise darauf gerichtet sein, den Arbeitskolben des Aktors mit einer vorgegebenen Verfahrgeschwindigkeit und/oder unter Aufrechterhaltung einer vorgegebenen Steifigkeit und/oder mit einer vorgegebenen Positioniergenauigkeit zu bewegen. Die Bewegungsaufgabe kann auch darauf gerichtet sein, dass während der Bewegung des Arbeitskolbens die Verfahrgeschwindigkeit und/oder die Steifigkeit und/oder die Positioniergenauigkeit variiert werden.

Um eine Ermittlung des ersten Maximaldruckniveaus und des zweiten Maximaldruckniveaus aus der Bewegungsaufgabe durchführen zu können, kann die Steuereinrichtung dazu ausgebildet sein, eine Mittendruckoptimierung durchzuführen. Diese Mittendruckoptimierung zielt darauf ab, den zur Erfüllung der Bewegungsaufgabe notwendigen Mittendruck beispielsweise unter Verwendung eines in der Steuereinrichtung hinterlegten Berechnungsmodells zu ermitteln und daraus das erste Maximaldruckniveau und das zweite Maximaldruckniveau zu berechnen. Die Mittendruckoptimierung zielt darauf ab, den minimalen Mittendruck aufzufinden, mit dem die Bewegungsaufgabe noch erfüllt werden kann. Hierzu bezieht die Steuereinrichtung neben den Randbedingungen, die in der Bewegungsaufgabe enthalten sind, auch die Dimensionierung des Aktors und/oder die Eigenschaften einer vom Aktor zu bewegenden Komponente mit ein. Bei der zu bewegenden Komponente kann es sich beispielsweise um ein Maschinenteil handeln, das vom Aktor zwischen einer ersten Funktionsstellung und einer zweiten Funktionsstellung bewegt werden soll. Bei der anschließenden Durchführung der Bewegungsaufgabe erfolgt dann die Bereitstellung der Druckluft an den ersten und zweiten Arbeitsraum des Aktors unter Einhaltung des ersten Maximaldruckniveaus und des zweiten Maximaldruckniveaus.

Eine Möglichkeit zur Durchführung der Mittendruckoptimierung besteht darin, den Aktor als System mit einer Masse, die beidseitig von Federn gehalten ist, zu modellieren. Hierbei ist entscheidend, dass für die beiden Federn in einer Mittelstellung der Masse, bei der die beiden Arbeitskammern des Aktors jeweils das gleiche Volumen aufweisen, auch die gleiche Federsteifigkeit angenommen wird. Befindet sich die Masse hingegen außerhalb der Mitte, weist die Arbeitskammer mit dem geringen Volumen eine höhere Federsteifigkeit auf als die Arbeitskammer, die ein höheres Volumen aufweist. Mit dieser Modellierung kann beispielsweise das Verhalten eines Pneumatikzylinders vorhergesagt werden, der mit einer horizontalen Bewegung der Kolbenstange eine Verschiebung einer konstanten Masse bewirken soll. Bei anderen Einsatzfällen für Aktoren müssen gegebenenfalls weitere Randbedingungen wie beispielswiese eine nichtlineare Kinematik für die Modellierung berücksichtigt werden.

Prinzipiell ist es möglich, eine Veränderung des Mittendrucks während der Durchführung der Bewegungsaufgabe vorzusehen, damit in jeder Phase der vom Aktor durchzuführenden Bewegung stets nur die minimal notwendige Energiemenge eingesetzt wird, die zur Erfüllung der Bewegungsaufgabe erforderlich ist. Die Zielsetzung für die Ermittlung des ersten Maximaldruckniveaus und des zweiten Maximaldruckniveaus besteht somit darin, diese beiden Werte stets in Abhängigkeit von den Randbedingungen der Bewegungsaufgabe so zu wählen, dass der Energieeinsatz zur Verwirklichung der Bewegungsaufgabe minimal ist.

Im Vergleich zu einer Betriebsweise für den Aktor, die ohne eine Mittendruckoptimierung durchgeführt wird, ergibt sich bei einer Betriebsweise für den Aktor, die mit der Mittendruckoptimierung durchgeführt wird, neben einem verringerten Energieverbrauch auch reduzierter Verschleiß, da die Komponenten des Aktors durch das geringere Druckniveau weniger beansprucht werden.

Das erste Maximaldruckniveau und das zweite Maximaldruckniveau werden bei der Durchführung der Druckregelung derart im ersten Druckregler und im zweiten Druckregler berücksichtigt, dass der Druck am ersten Arbeitsanschluss und am zweiten Arbeitsanschluss, insbesondere stets, unterhalb des jeweiligen Maximaldruckniveaus liegt. Eine kurzzeitige Überschreitung des ersten Maximaldruckniveaus und/oder des zweiten Maximaldruckniveaus kann in Kauf genommen werden, sofern diese Überschreitung innerhalb eines vorgegebenen Druck- und/oder Zeitintervalls liegt. Durch eine solche Überschreitung wird weder die Funktion des Ventilsystems noch die Funktion des Aktors in Frage gestellt. Vielmehr liegt der Beziehung zwischen der Bewegungsaufgabe und den beiden Maximaldruckwerten die Überlegung zugrunde, dass manche Bewegungsaufgaben mit geringeren Maximaldruckwerten durchgeführt werden können, da nur geringer Anforderungen an die Verfahrgeschwindigkeit und/oder die Steifigkeit und/oder die Positioniergenauigkeit gestellt werden und durch die niedrigen Maximaldruckwerte eine hohe Energieeffizienz bei dieser Bewegungsaufgabe verwirklicht werden kann. Demgegenüber kann bei einer anderen Bewegungsaufgabe vorgesehen sein, dass wenigstens ein Parameter aus der Gruppe: Verfahrgeschwindigkeit, Steifigkeit, Positioniergenauigkeit, einer hohen Anforderung zu genügen hat und daher auch hohe erste und zweite Maximaldruckwerte vorgegeben werden müssen, die mit einer verringerten Energieeffizienz einhergehen.

Vorteilhafte Weiterbildungen der Erfindung sind Gegenstand der Unteransprüche.

Zweckmäßig ist es, wenn die Steuereinrichtung eine Sensorschnittstelle zur Verbindung mit einem Positionssensor, der einem Aktor zugeordnet ist, aufweist und für eine Verarbeitung eines Positionssignals des Positionssensors ausgebildet ist und dass die Steuereinrichtung einen Positionsregler aufweist, mit dem das Positionssignal für eine Aktorpositionsregelung verwendet werden kann. Die Sensorschnittstelle kann als elektromechanischer Steckverbinder ausgebildet sein, der über eine Kabelverbindung mit der Steuereinrichtung verbunden ist und der eine Einkopplung eines analogen oder digitalen Positionssignals eines diskret ausgebildeten Positionssensors ermöglicht. Alternativ kann die Sensorschnittstelle als Kommunikationsschnittstelle ausgebildet sein, über die ein digitales Kommunikationssignal, beispielsweise ein Bussignal eines Industriebussystems oder ein IO-Link-Signal, eingekoppelt werden kann, das vom Positionssensor oder von einem zwischen den Positionssensor und die Steuereinrichtung eingeschleiften Kommunikationssystem bereitgestellt wird. Der Positionssensor stellt ein Positionssignal bereit, das von einer Position des Arbeitskolbens längs des Bewegungswegs abhängig ist und das in der Steuereinrichtung zur Durchführung einer Positionsregelung für den Aktor verwendet wird. Der hierzu notwendige Positionsregler kann als elektrische oder elektronische Schaltung der Steuereinrichtung oder als Computerprogramm, das in einem Mikroprozessor der Steuereinrichtung ausgeführt wird, ausgebildet sein. Bevorzugt ist vorgesehen, dass der Positionsregler, der erste Druckregler und der zweiten Druckregler eine Kaskadenregelung bilden. Hierbei kann vorgesehen sein, dass der Positionsregler als Führungsregler eingesetzt wird, dem die beiden Druckregler unterlagert sind.

Alternativ ist vorgesehen, dass die Steuereinrichtung für eine Auswertung des ersten Drucksignals des ersten Drucksensors und des zweiten Drucksignals des zweiten Drucksensors ausgebildet ist, um eine Positionsinformation für einen Aktor zu ermitteln, und dass die Steuereinrichtung einen Positionsregler aufweist, mit dem die Positionsinformation für eine Aktorpositionsregelung verwendet werden kann. Eine solche druckbasierte Positionsbestimmung hat den Vorteil, dass kein zusätzlicher Positionssensor benötigt wird. Eine solche Positionsbestimmung kann unter Verwendung eines in der Steuereinrichtung ablaufenden Computerprogramms vorgenommen werden. Dieses Computerprogramm bildet einen Beobachter, der aus den Änderungen der ersten und zweiten Drucksignale die Positionsinformation ermittelt. Beispielhaft kann vorgesehen sein, dass bei einer Inbetriebnahme eines Antriebssystems, das das erfindungsgemäße Ventilsystem und einen damit verbundenen Aktor umfasst, zunächst eine Kalibrierung vorgenommen werden muss, um eine eindeutige Positionsinformation für den Arbeitskolben aus den ersten und zweiten Drucksignalen berechnen zu können. Diese Kalibrierung kann beispielsweise dadurch vorgenommen werden, dass eine der Arbeitskammern des Aktors entlüftet wird und die andere Arbeitskammer belüftet wird, so dass der Arbeitskolben am Beginn seines Bewegungswegs angeordnet ist und ausgehend von dieser Ausgangsposition auf Basis der nachfolgenden Druckänderungen für den Aktor die Position des Arbeitskolbens ermittelt werden kann. Der Positionsregler kann als elektrische oder elektronische Schaltung der Steuereinrichtung oder als Computerprogramm ausgebildet sein. Bevorzugt ist vorgesehen, dass der Positionsregler, der erste Druckregler und der zweiten Druckregler eine Kaskadenregelung bilden. Hierbei kann vorgesehen sein, dass der Positionsregler als Führungsregler eingesetzt wird, dem die beiden Druckregler unterlagert sind.

Bei einer Weiterbildung der Erfindung ist vorgesehen, dass die Steuereinrichtung eine Kommunikationsschnittstelle aufweist, die für einen Empfang einer Bewegungsaufgabe von einer übergeordneten Maschinensteuerung ausgebildet ist, wobei die Steuereinrichtung für eine Verarbeitung der Bewegungsaufgabe ausgebildet ist, um aus der Bewegungsaufgabe wenigstens einen Parameter aus der Gruppe: erstes Maximaldruckniveau, zweites Maximaldruckniveau, Aktorpositionsabweichung, Aktorsollgeschwindigkeit, Aktorsollsteifigkeit, Aktorminimalgeschwindigkeit, Aktormaximalgeschwindigkeit, zu entnehmen und anhand des wenigstens einen Parameters das erste Maximaldruckniveau und das zweite Maximaldruckniveau zu bestimmen. Die Bewegungsaufgabe definiert die Positionsveränderung für den Arbeitskolben des Aktors ausgehend von der aktuellen Position des Arbeitskolbens. Beispielsweise kann eine Bewegungsaufgabe darauf ausgerichtet sein, dass der Arbeitskolben von seiner aktuellen Position in einer kurzen Zeitspanne, die beispielsweise kleiner als 1 Sekunde sein kann, mit einer hohen Positioniergenauigkeit und einer hohen Steifigkeit an eine neue Position verlagert wird. Eine andere Bewegungsaufgabe kann darauf ausgerichtet sein, dass der Arbeitskolben in einer längeren Zeitspanne, die beispielsweise mehrere Sekunden betragen kann, mit einer geringen Positioniergenauigkeit und einer geringen Steifigkeit an eine neue Position verlagert wird. Aus der jeweiligen Bewegungsaufgabe kann somit zumindest ein Parameter entnommen werden, mit dem eine Festlegung für das erste Maximaldruckniveau und das zweite Maximaldruckniveau durchgeführt wird. Beispielhaft ist vorgesehen, dass das erste Maximaldruckniveau und/oder das zweite Maximaldruckniveau unmittelbar in der Bewegungsaufgabe enthalten sind und von der Steuereinrichtung direkt für die Durchführung der ersten und/oder der zweiten Druckregelung genutzt werden kann. Hingegen erfordern in der Bewegungsaufgabe enthaltene Parameter wie die Aktorpositionsabweichung, die Aktorsollgeschwindigkeit, die Aktorsollsteifigkeit, die Aktorminimalgeschwindigkeit oder die Aktormaximalgeschwindigkeit eine Durchführung von Berechnungen in der Steuereinheit. Diese Berechnungen sind insbesondere auf die Eigenschaften des Aktors und/oder die Eigenschaften der ersten Ventilgruppe und der zweiten Ventilgruppe abzustimmen. Beispielsweise ist es vorteilhaft, wenn die Art und Dimensionierung des Aktors bekannt sind. Ferner ist es vorteilhaft, wenn ein als Leitwert bezeichneter und von der jeweiligen Ventilstellung abhängiger Fluidwiderstand der ersten und/oder der zweiten Ventilgruppe bekannt ist.

Die Aktorpositionsabweichung bezeichnet eine Differenz zwischen einer vorgegebenen Sollposition des Arbeitskolbens und einer tatsächlichen Istposition des Arbeitskolbens während der Durchführung der Bewegungsaufgabe oder am Ende der durchgeführten Bewegungsaufgabe.

Typischerweise ist davon auszugehen, dass der Arbeitskolben aufgrund der im Aktor vorliegenden Haft- und Gleitreibungseffekte eine größere Aktorpositionsabweichung aufweist, wenn ein geringer Betrag für das erste und/oder das zweite Maximaldruckniveau gewählt wird. Die Aktorsollgeschwindigkeit, die Aktorsollsteifigkeit und die Aktormaximalgeschwindigkeit nehmen mit zunehmendem Betrag für das erste und/oder das zweite Maximaldruckniveau zu. Die Einhaltung einer Aktorminimalgeschwindigkeit setzt einen gewissen Betrag für das erste und/oder das zweite Maximaldruckniveau voraus.

In weiterer Ausgestaltung der Erfindung ist vorgesehen, dass die erste Ventilgruppe und die zweite Ventilgruppe jeweils als Piezoventile, insbesondere Piezobiegerventile, oder Magnetventile oder fluidisch vorgesteuerte Ventile ausgebildet sind.

Bei Piezoventilen wird der piezoelektrische Effekt genutzt, um ein Ventilglied, das beispielsweise für eine Abdichtwirkung an einem Ventilsitz ausgebildet ist, relativ zum Ventilsitz zu bewegen. Hierzu kann das Piezoventil einen Stapel von piezoelektrischen Elementen aufweisen, die durch Anlegen einer elektrischen Spannung eine Längenänderung durchführen und damit die gewünschte Relativbewegung bereitstellen können. Bevorzugt ist vorgesehen, dass das piezoelektrische Element streifenförmig ausgebildet und an einem ersten Endbereich in einem Ventilgehäuse eingespannt ist und dass an einem zweiten Endbereich des piezoelektrischen Elements ein als Ventilglied dienendes Dichtelement angebracht ist. Hierbei wird durch Anlegen einer elektrischen Spannung eine Krümmungsänderung für piezoelektrische Element bewirkt, so dass das Dichtelement wahlweise abdichtend auf dem Ventilsitz aufliegt oder abseits des Ventilsitzes angeordnet ist und einen Fluidstrom durch den Ventilsitz freigibt.

Bei Magnetventilen wird durch Bestromung einer elektrischen Spulenanordnung ein magnetischer Fluss bereitgestellt, mit dem eine Positionsänderung eines der Spulenanordnung zugeordneten Ankers hervorgerufen werden kann. Dieser Anker kann unmittelbar als Ventilglied ausgebildet sein oder für eine mittelbare Betätigung eines Ventilglieds ausgebildet sein.

Bei einem fluidisch vorgesteuerten Ventil wird ein Ventilglied durch eine Druckbeaufschlagung mit Druckluft zwischen einer ersten Funktionsposition und einer zweiten Funktionsposition bewegt, wobei das Ventilglied in der ersten Funktionsposition einen Fluidstrom durch das Ventil blockiert und in der zweiten Funktionsposition freigibt.

Bevorzugt ist vorgesehen, dass die erste Ventilgruppe und die zweite Ventilgruppe jeweils als 3/2- Wegeventil oder als 3/3-Wegeventil ausgebildet ist oder dass die erste Ventilgruppe und die zweite Ventilgruppe jeweils zwei 2/2-Wegeventile umfassen und in einer Vollbrückenschaltung angeordnet sind. Bevorzugt sind die Ventile der ersten und der zweiten Ventilgruppe als Proportionalventile ausgebildet, da sich hiermit eine vorteilhafte Druckregelung für den ersten und den zweiten Arbeitsanschluss verwirklichen lässt. Alternativ ist vorgesehen, dass die Ventile der ersten und der zweiten Ventilgruppe als Schaltventile ausgebildet sind, die beispielsweise mit pulsweitenmodulierten Schaltsignalen angesteuert werden. Die erste und/oder die zweite Ventilgruppe können als 3/2-Wegeventil, so dass der jeweilige Arbeitsanschluss entweder belüftet oder entlüftet werden kann. Alternativ können die erste und/oder zweite Ventilgruppe als 3/3-Wegeventil ausgebildet sein, wobei zusätzlich zur Belüftung und Entlüftung des jeweiligen Arbeitsanschlusses auch eine Sperrung des jeweiligen Arbeitsanschlusses ermöglicht wird. Bei einer Ausgestaltung der ersten und/oder der zweiten Ventilgruppe als Anordnung von zwei 2/2-Wegeventilen ist vorgesehen, dass ein erstes 2/2-Wegeventil zwischen dem Versorgungsanschluss und dem jeweiligen Arbeitsanschluss angeordnet ist, während ein zweites 2/2-Wegeventil zwischen dem jeweiligen Arbeitsanschluss und dem Abluftanschluss angeordnet ist. Hierbei bilden die beiden 2/2-Wegevnetile eine Halbbrückenschaltung. Sofern sowohl die erste Ventilanordnung als auch die zweite Ventilanordnung aus jeweils zwei 2/2-Wegeventilen gebildet ist, entsteht durch die Verbindung der beiden Halbbrückenschaltungen eine Vollbrückenschaltung. Die Verwendung von 2/2-Wegeventilen in einer Vollbrückenschaltung bietet sich insbesondere für Piezobiegerventile an.

In weiterer Ausgestaltung der Erfindung ist vorgesehen, dass die Steuereinrichtung derart eingerichtet ist, dass das erste Maximaldruckniveau und das zweite Maximaldruckniveau aus einer Mittendruckoptimierung hervorgehen, die von der Steuereinrichtung anhand wenigstens einer Randbedingung aus der Gruppe: Aktorpositionsabweichung, Aktorsollgeschwindigkeit, Aktorsollsteifigkeit, Aktorminimalgeschwindigkeit, Aktormaximalgeschwindigkeit durchgeführt wird. Die Festlegung des ersten Maximaldruckniveaus und des zweiten Maximaldruckniveaus erfolgt derart, dass für die jeweilige Bewegung des pneumatischen Aktors ein minimaler Mittendruck genutzt wird. Dieser Mittendruck ist so zu wählen, dass die gewünschte Bewegung des Aktors zuverlässig durchgeführt werden kann und die zur Erzeugung der gewünschten Bewegung eingesetzte Energiemenge, die in Form von Druckluft an den ersten Arbeitsraum und den zweiten Arbeitsraum des Aktors bereitgestellt wird, minimal ist. Beispielhaft handelt es sich bei dem Mittendruck um einen Mittelwert, der aus dem ersten Maximaldruckniveau und dem zweiten Maximaldruckniveau gebildet wird.

Die Aufgabe der Erfindung wird gemäß einem zweiten Erfindungsaspekt durch Verfahren zum Betreiben eines pneumatischen Aktors, wobei der Aktor ein Aktorgehäuse mit einer Aktorausnehmung und einen beweglich, insbesondere linearbeweglich oder schwenkbeweglich, längs eines Bewegungswegs in der Aktorausnehmung aufgenommenen Arbeitskolben umfasst, wobei der Arbeitskolben die Aktorausnehmung in einen größenvariablen ersten Arbeitsraum und in einen größenvariablen zweiten Arbeitsraum unterteilt, mit den Schritten: Ermitteln eines ersten Arbeitsdrucks im ersten Arbeitsraum, Ermitteln eines zweiten Arbeitsdrucks im zweiten Arbeitsraum, Ermitteln einer Istposition des Arbeitskolbens längs des Bewegungswegs, Empfangen einer Bewegungsaufgabe und Ermitteln wenigstens eines Parameters aus der Gruppe: Aktorsollsteifigkeit, Aktorstörsteifigkeit, Aktorminimalgeschwindigkeit, Aktormaximalgeschwindigkeit, Aktorpositioniergenauigkeit, aus der vom Arbeitskolben durchzuführenden Bewegungsaufgabe, Ermitteln eines von dem wenigstens einen Parameter abhängigen ersten Maximaldruckniveaus für den ersten Arbeitsraum, Ermitteln eines von dem wenigstens einen Parameter abhängigen zweiten Maximaldruckniveaus für den zweiten Arbeitsraum, Durchführen einer ersten Druckregelung für den ersten Arbeitsraum mit dem ersten Maximaldruckniveau, Durchführen einer zweiten Druckregelung für den zweiten Arbeitsraum mit dem ersten Maximaldruckniveau, um die Bewegungsaufgabe für den Arbeitskolben durchzuführen.

Bei einer vorteilhaften Weiterbildung des Verfahrens ist vorgesehen, dass während der Durchführung der Bewegungsaufgabe für den Arbeitskolben anhand eines Verlaufs des ersten Arbeitsdrucks und anhand eines Verlaufs des zweiten Arbeitsdrucks eine Istposition des Arbeitskolbens ermittelt wird und dass mit der Istposition und einer aus der Bewegungsaufgabe berechneten Sollposition für den Arbeitskolben eine Positionsregelung unter Berücksichtigung des ersten Maximaldruckniveaus und des zweiten Maximaldruckniveaus durchgeführt wird.

In weiterer Ausgestaltung des Verfahrens ist vorgesehen, dass während der Durchführung der Bewegungsaufgabe für den Arbeitskolben eine Istposition des Arbeitskolbens anhand eines Positionssignals eines dem Aktor zugehörigen Positionssensors ermittelt wird und dass mit der Istposition und einer aus der Bewegungsaufgabe berechneten Sollposition für den Arbeitskolben eine Positionsregelung unter Berücksichtigung des ersten Maximaldruckniveaus und des zweiten Maximaldruckniveaus durchgeführt wird.

Bei einer vorteilhaften Weiterbildung des Verfahrens ist vorgesehen, dass die Bewegungsaufgabe eine Veränderung des wenigstens einen Parameters in Abhängigkeit von einer Positionsänderung des Arbeitskolbens enthält und dass eine Anpassung des ersten Maximaldruckniveaus und des zweiten Maximaldruckniveaus in Abhängigkeit von der Positionsänderung des Arbeitskolbens durchgeführt wird.

In weiterer Ausgestaltung des Verfahren ist vorgesehen, dass das erste Maximaldruckniveau und das zweite Maximaldruckniveau aus einer Mittendruckoptimierung hervorgehen, die von der Steuereinrichtung anhand wenigstens einer Randbedingung aus der Gruppe: Aktorpositionsabweichung, Aktorsollgeschwindigkeit, Aktorsollsteifigkeit, Aktorminimalgeschwindigkeit, Aktormaximalgeschwindigkeit durchgeführt wird.

Eine vorteilhafte Ausführungsform der Erfindung ist in der Zeichnung dargestellt. Hierbei zeigt:
- Figur 1: eine erste Ausführungsform eines Ventilsystems, bei dem die erste Ventilgruppe und die zweite Ventilgruppe jeweils als elektrofluidische 3/2-Wegeventile ausgebildet sind und dem ein Pneumatikzylinder als Aktor sowie ein Positionssensor zugeordnet sind, und
- Figur 2: eine zweite Ausführungsform eines Ventilsystems, bei dem die erste Ventilgruppe und die zweite Ventilgruppe jeweils als Halbbrücke aus zwei 2/2-Wegevnentilen ausgebildet sind und dem ein als Schwenkantrieb ausgebildeter Aktor zugeordnet sind.

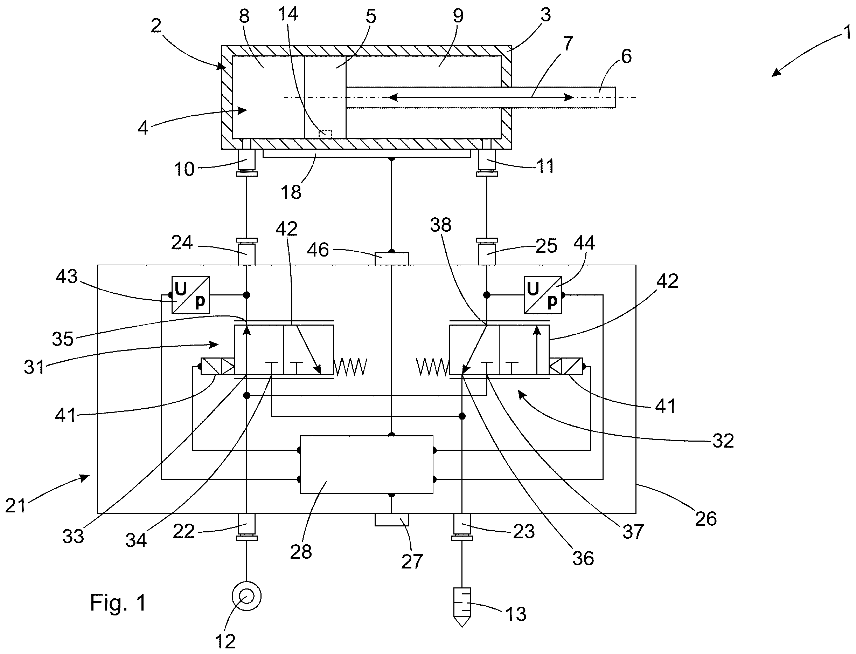

Ein in der Figur 1 gezeigtes pneumatisches System 1 umfasst einen Aktor 2, eine Fluidquelle 12 und ein Ventilsystem 21. Der Aktor 2 ist rein exemplarisch als Pneumatikzylinder ausgebildet und umfasst ein auch als Aktorgehäuse bezeichnetes Zylindergehäuse 3, in dem eine auch als Aktorausnehmung bezeichnete Zylinderbohrung 4 ausgebildet ist. In der Zylinderbohrung 4 ist ein Arbeitskolben 5 linearbeweglich aufgenommen, an dem eine Kolbenstange 6 angebracht ist, die das Zylindergehäuse 3 stirnseitig durchsetzt und die in nicht gezeigter Weise mit einer Maschinenkomponente gekoppelt werden kann, die durch den Aktor 2 in eine Bewegung versetzt werden soll. Um eine Linearbewegung des Arbeitskolbens 5 und der Kolbenstange 6 längs eines als Bewegungsachse 7 bezeichneten Bewegungswegs hervorzurufen, können ein erster Arbeitsraum 8 und ein zweiter Arbeitsraum 9 über einen zugeordneten ersten Fluidanschluss 10 und einen zweiten Fluidanschluss 11 wahlweise belüftet oder entlüftet werden. Durch die Belüftung findet eine Druckerhöhung im jeweiligen Arbeitsraum 8, 9 statt, durch die Entlüftung findet eine Druckabsenkung im jeweiligen Arbeitsraum 8, 9 statt. In Abhängigkeit von einem ersten Fluiddruck im ersten Arbeitsraum 8 und von einem zweiten Arbeitsdruck im zweiten Arbeitsraum 9 stellen sich Drucckräfte ein, die unter anderem auch auf den Arbeitskolben 5 wirken. Sofern ein Kräftegleichgewicht zwischen den Drucckräften, die im ersten Arbeitsraum 8 auf den Arbeitskolben 5 wirken und den Druckkräften, die im zweiten Arbeitsraum 9 auf den Arbeitskolben 5 wirken vorliegt, findet (unter der Voraussetzung, dass keine äußeren Kräfte auf die Kolbenstange 6 einwirken) keine Bewegung des Arbeitskolbens 5 und der Kolbenstange 6 statt. Liegt hingegen eine Differenz zwischen den in den jeweiligen Arbeitsräumen 8, 9 auf den Arbeitskolben 5 wirkenden Druckkräften vor, kann hierdurch eine Bewegung des Arbeitskolbens 5 und der Kolbenstange 6 hervorgerufen werden.

Um eine Einflussnahme auf den ersten Fluiddruck im ersten Arbeitsraum 8 und den zweiten Fluiddruck im zweiten Arbeitsraum 9 zu ermöglichen, ist das Ventilsystem 21 vorgesehen. Das Ventilsystem 21 umfasst rein exemplarisch eine erste Ventilgruppe 31, eine zweite Ventilgruppe 32, einen ersten Drucksensor 43, einen zweiten Drucksensor 44 sowie eine Steuereinrichtung 28, wobei diese Komponenten in einem gemeinsamen Ventilgehäuse 26 angeordnet sind.

Beispielhaft ist vorgesehen, dass die erste Ventilgruppe 31 und die zweite Ventilgruppe 32 jeweils als proportional ansteuerbares elektrofluidisches 3/2-Wegeventil ausgebildet sind. Dieses 3/2-Wegeventil wird durch ein von der Steuereinrichtung 28 bereitgestelltes elektrisches Signal angesteuert, wobei ein nur schematisch dargestelltes Magnetvorsteuerventil 41 dieses elektrische Signal empfängt und in eine Ventilbewegung eines nicht näher dargestellten Ventilglieds umsetzt. Durch diese Ventilbewegung des Ventilglieds des Magnetvorsteuerventils 41 wird Steuerluft an ein Ventilglied eines Hauptventils 42 bereitgestellt, so dass dieses Ventilglied aus einem ersten Funktionszustand in einen zweiten Funktionszustand überführt werden kann. Rein exemplarisch ist vorgesehen, dass die erste Ventilgruppe 31 in dem zweiten Funktionszustand befindet, während sich die zweite Ventilgruppe 32 in dem ersten Funktionszustand befindet. Beispielhaft sind die 3/2-Wegeventile der beiden Ventilgruppen 31 und 32 derart ausgebildet, dass sie ohne ein elektrisches Signal den ersten Funktionszustand einnehmen. Hingegen werden die 3/2-Wegeventile der beiden Ventilgruppen 31 und 32 bei Vorliegen eines elektrischen Signals aus dem ersten Funktionszustand in den zweiten Funktionszustand überführt, wobei sich die Stellung der jeweiligen Ventilglieder proportional zu einem Signalpegel des elektrischen Signals einstellen lässt.

Beispielhaft ist vorgesehen, dass ein erster Eingangsanschluss 33 der ersten Ventilgruppe 31 und ein zweiter Eingangsanschluss 37 der zweiten Ventilgruppe 32 mit einem Versorgungsanschluss 22 verbunden sind, der seinerseits mit einer Fluidquelle 12 verbunden ist. Ferner sind ein zweiter Eingangsanschluss 34 der ersten Ventilgruppe 31 und ein erster Eingangsanschluss 35 der zweiten Ventilgruppe 32 mit einem Abluftanschluss 23 verbunden, an dem rein exemplarisch ein Schalldämpfer 13 angeordnet ist. Ein Ausgangsanschluss 35 der ersten Ventilgruppe 31 ist mit einem ersten Arbeitsanschluss 24 verbunden, der seinerseits mit dem ersten Fluidanschluss 10 verbunden ist. Ein Ausgangsanschluss 38 der zweiten Ventilgruppe 32 ist mit einem zweiten Arbeitsanschluss 25 verbunden, der seinerseits mit dem zweiten Fluidanschluss 11 verbunden ist.

Dementsprechend kann die erste Ventilgruppe 31 in dem nicht gezeigten ersten Funktionszustand einen Abluftpfad zwischen dem ersten Arbeitsanschluss 24 und dem Abluftanschluss 23 freigeben und in dem zweiten Funktionszustand, wie er in der Figur 1 für die erste Ventilgruppe 31 gezeigt ist, einen Versorgungspfad zwischen dem Versorgungsanschluss 22 und dem ersten Arbeitsanschluss 24 freigeben.

Ferner kann die zweite Ventilgruppe 32 in dem ersten Funktionszustand, wie er in der Figur 1 für die zweite Ventilgruppe 31 gezeigt ist, einen Abluftpfad zwischen dem zweiten Arbeitsanschluss 25 und dem Abluftanschluss 23 freigeben und in dem nicht dargestellten zweiten Funktionszustand einen Versorgungspfad zwischen dem Versorgungsanschluss 22 und dem zweiten Arbeitsanschluss 25 freigeben.

Die dem Ventilsystem 21 zugehörige Steuereinrichtung 28 ist elektrisch mit der ersten Ventilgruppe 31 und der zweiten Ventilgruppe 32 verbunden. Ferner ist die Steuereinrichtung 28 elektrisch mit einem ersten Drucksensor 43 verbunden, der dem ersten Arbeitsanschluss 24 zugeordnet ist, sowie elektrisch mit einem zweiten Drucksensor 44 verbunden, der dem zweiten Arbeitsanschluss 25 zugeordnet ist. Darüber hinaus ist die Steuereinrichtung 28 mit einer Sensorschnittstelle 46 elektrisch verbunden, an der ein Positionssensor 18 angeschlossen ist, der dem Aktor 2 zugeordnet ist. Rein exemplarisch ist der Positionssensor 18 dazu ausgebildet, eine Position eines im Arbeitskolben 5 angeordneten Permanentmagneten 14 zu ermitteln und ein von der Position des Permanentmagneten 14 abhängiges Sensorsignal an die Steuereinrichtung 28 bereitzustellen. Die Steuereinrichtung 28 ist zudem mit einer Kommunikationsschnittstelle 27 verbunden, über die eine Kommunikation mit einer nicht dargestellten, übergeordneten Maschinensteuerung, insbesondere unter Verwendung eines Busprotokolls, vorgenommen werden kann.

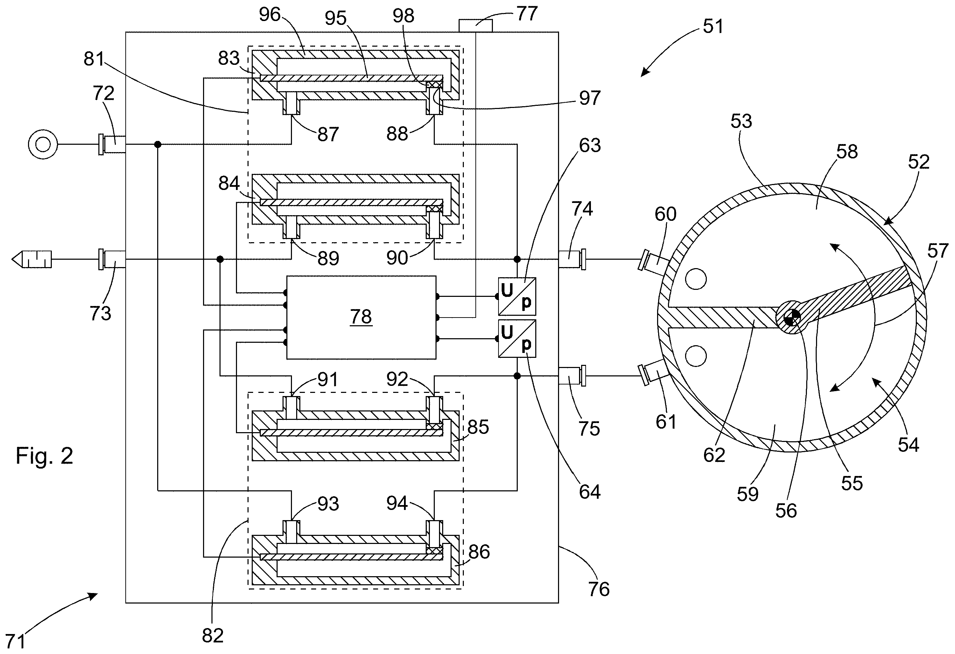

Bei der zweiten Ausführungsform eines Ventilsystems 71, wie es in der Figur 2 gezeigt ist, sind in einem Ventilgehäuse 76, das an einer Außenoberfläche mit einem Versorgungsanschluss 72, einen Abluftanschluss 73, einem ersten Arbeitsanschluss 74, einem zweiten Arbeitsanschluss 75 sowie einer Kommunikationsschnittstelle 77 versehen ist, insgesamt vier Piezoventile 83, 84, 85, 86 aufgenommen. Hierbei bilden die Piezoventile 83 und 84 eine erste Ventilgruppe 81, während die Piezoventile 85 und 86 eine zweite Ventilgruppe 82 bilden.

Jedes der Piezoventile 83 bis 86 ist als 2/2-Wegeventil ausgebildet und weist jeweils einen endseitig in einer Ventilkartusche 96 festgelegten Piezobieger 95 auf, der an einem freien Ende mit einem Dichtelement 98 versehen ist, das für eine abdichtende Anlage an einem in der Ventilkartusche 96 ausgebildeten Ventilsitz 97 vorgesehen ist. Der Piezobieger 95 kann ausgehend von einer ersten Funktionsstellung, die in der Figur 2 gezeigt ist, durch Anlegen einer elektrischen Spannung, die von einer Steuereinrichtung 78 bereitgestellt werden kann, in einen nicht dargestellten, gekrümmten Zustand überführt werden, in dem das Dichtelement 98 vom Ventilsitz 97 abgehoben wird, so dass ein Fluidstrom durch den Ventilsitz 97 ermöglicht wird.

Beispielhaft ist vorgesehen, dass ein erster Eingangsanschluss 87 des Piezoventils 83 und ein vierter Eingangsanschluss 93 des Piezoventils 86 mit dem Versorgungsanschluss 72 verbunden sind, der mit der Fluidquelle 12 verbunden ist. Ferner ist exemplarisch vorgesehen, dass ein zweiter Eingangsanschluss 89 des Piezoventils 84 und ein dritter Eingangsanschluss 91 des Piezoventils 85 mit dem Abluftanschluss 73 verbunden sind, an dem der Schalldämpfer 13 angebracht ist. Ein erster Ausgangsanschluss 88 des Piezoventils 83 und ein zweiter Ausgangsanschluss 90 des Piezoventils 84 sind mit dem ersten Arbeitsanschluss 74 verbunden. Ein dritter Ausgangsanschluss 92 des Piezoventils 85 und ein vierter Ausgangsanschluss 94 des Piezoventils 86 sind mit dem zweiten Arbeitsanschluss 75 verbunden.

Dem ersten Arbeitsanschluss 74 ist ein erster Drucksensor 43 zugeordnet, der elektrisch mit der Steuereinrichtung 78 verbunden ist. Dem zweiten Arbeitsanschluss 75 ist ein zweiter Drucksensor 44 zugeordnet, der elektrisch mit der Steuereinrichtung 78 verbunden ist.

Beispielhaft weist das pneumatische System 51 gemäß der Figur 2 einen als Schwenkantrieb ausgebildeten Aktor 52 auf. Der Aktor 52 weist ein nur schematisch dargestelltes, kreiszylindrisch ausgebildetes Aktorgehäuse 53 mit einer kreiszylindrischen Aktorausnehmung 54 auf. In der Aktorausnehmung 54 ist ein Schwenkflügel 55 schwenkbeweglich längs eines kreisabschnittsförmigen Bewegungswegs 57 um eine normal zur Darstellungsebene der Figur 2 ausgerichtete Schwenkachse 56 aufgenommen. Dabei ist der Schwenkflügel 55 gegenüber einem fest in der Aktorausnehmung 54 angeordneten Gehäusesteg 62 und den nicht bezeichneten Innenoberflächen der Aktorausnehmung 54 abgedichtet. Der Schwenkflügel 55 trennt somit zusammen mit dem Gehäusesteg 62 und den nicht bezeichneten Innenoberflächen der Aktorausnehmung 54 einen ersten Arbeitsraum 58 von einem zweiten Arbeitsraum 59. Ein erster Fluidanschluss 60 mündet in den ersten Arbeitsraum 58 und ist mit dem ersten Arbeitsanschluss 74 verbunden. Ein zweiter Fluidanschluss 61 mündet in den zweiten Arbeitsraum 59 und ist mit dem zweiten Arbeitsanschluss 75 verbunden.

Die Steuereinrichtung 78 ist mit den Piezobiegern 95 der Piezoventile 83 bis 86 elektrisch verbunden und kann durch Bereitstellung von elektrischen Steuerspannungen an die jeweiligen Piezobieger 95 einen individuellen Biegezustand und damit auch einen individuellen Öffnungs- oder Schließzustand für das jeweilige Piezoventil 83 bis 86 beeinflussen. Vorzugsweise ist vorgesehen, dass die Piezoventile 83 bis 86 paarweise gegensinnig angesteuert werden. Beispielsweise kann vorgesehen sein, dass gleichzeitig das erste Piezoventil 83 und das vierte Piezoventil 86 geöffnet werden, um eine Belüftung des ersten Arbeitsraums 58 und eine Entlüftung des zweiten Arbeitsraums 59 zu bewirken, wodurch eine Schwenkbewegung des Schwenkflügels 55 im Uhrzeigersinn (gemäß der Darstellung der Figur 2) erfolgt. Für eine entgegengesetzte Schwenkbewegung des Schwenkflügels 55 ist hingegen eine Öffnung des zweiten Piezoventils 84 und des dritten Piezoventils 85 vorzusehen.

Sowohl bei dem pneumatischen System 1 gemäß der Figur 1 als auch bei dem pneumatischen System 51 gemäß der Figur 2 kann die jeweilige Steuereinrichtung 28, 78 über die zugeordnete Kommunikationsschnittstelle 27, 77 von einer nicht dargestellten, übergeordneten Steuerung eine Bewegungsaufgabe empfangen. Aus dieser Bewegungsaufgabe kann die Steuereinrichtung 28, 78 ein erstes Maximaldruckniveau und ein zweites Maximaldruckniveau entnehmen oder, gegebenenfalls unter Rückgriff auf in der Steuereinrichtung 28, 78 gespeicherte Daten, ermitteln. Bei der Durchführung der Bewegungsaufgabe ist die Steuereinrichtung 28, 78 dazu eingerichtet, den ersten Druckregler und den zweiten Druckregler auf das erste Maximaldruckniveau bzw. das zweite Maximaldruckniveau zu begrenzen, um die Bewegungsaufgabe mit der minimalen Druckluftmenge bewältigen zu können, die zur Einhaltung der in der Bewegungsaufgabe enthaltenen Randbedingungen wie Aktorpositionsabweichung und/oder Aktorsollgeschwindigkeit und/oder Aktorsollsteifigkeit und/oder Aktorminimalgeschwindigkeit und/oder Aktormaximalgeschwindigkeit erforderlich ist.

Diese Begrenzung des ersten und zweiten Maximaldruckniveaus kann auf Basis von gespeicherten Maximaldruckniveaus vorgenommen werden, sofern der Aktor stets die gleiche Bewegungsaufgabe durchführen soll. Hierzu können die Maximaldruckniveaus für die Durchführung der Bewegungsaufgabe experimentell ermittelt werden, wobei die experimentelle Ermittlung darauf ausgerichtet ist, die Bewegung des Aktors unter Berücksichtigung aller Rahmenbedingungen wie beispielsweise Positioniergeschwindigkeit, Positioniergenauigkeit, Aktorsteifigkeit sowie mit minimalem Energieeinsatz zu verwirklichen.

Bei wechselnden Bewegungsaufgaben kann vorgesehen werden, dass das erste und das zweite Maximaldruckniveau aus einer Bewegungsaufgabe bestimmt werden, die beispielsweise darauf gerichtet sein kann, den Arbeitskolben des Aktors mit einer vorgegebenen Verfahrgeschwindigkeit und/oder unter Aufrechterhaltung einer vorgegebenen Steifigkeit und/oder mit einer vorgegebenen Positioniergenauigkeit zu bewegen. Die Bewegungsaufgabe kann auch darauf gerichtet sein, dass während der Bewegung des Arbeitskolbens die Verfahrgeschwindigkeit und/oder die Steifigkeit und/oder die Positioniergenauigkeit variiert werden.

Um eine Ermittlung des ersten Maximaldruckniveaus und des zweiten Maximaldruckniveaus aus der Bewegungsaufgabe durchführen zu können, kann die Steuereinrichtung dazu ausgebildet sein, eine Mittendruckoptimierung durchzuführen. Diese Mittendruckoptimierung zielt darauf ab, den zur Erfüllung der Bewegungsaufgabe notwendigen Mittendruck, insbesondere einen Mittelwert aus dem ersten Arbeitsdruck in der ersten Arbeitskammer und dem zweiten Arbeitsdruck in der zweiten Arbeitskammer, beispielsweise unter Verwendung eines in der Steuereinrichtung hinterlegten Berechnungsmodells zu ermitteln und daraus das erste Maximaldruckniveau und das zweite Maximaldruckniveau zu berechnen. Die Mittendruckoptimierung zielt darauf ab, den minimalen Mittendruck aufzufinden, mit dem die Bewegungsaufgabe noch erfüllt werden kann. Hierzu bezieht die Steuereinrichtung neben den Randbedingungen, die in der Bewegungsaufgabe enthalten sind, auch die Dimensionierung des Aktors und/oder die Eigenschaften einer vom Aktor zu bewegenden Komponente mit ein. Bei der zu bewegenden Komponente kann es sich beispielsweise um ein Maschinenteil handeln, das vom Aktor zwischen einer ersten Funktionsstellung und einer zweiten Funktionsstellung bewegt werden soll. Bei der anschließenden Durchführung der Bewegungsaufgabe erfolgt dann die Bereitstellung der Druckluft an den ersten und zweiten Arbeitsraum des Aktors unter Einhaltung des ersten Maximaldruckniveaus und des zweiten Maximaldruckniveaus.

Es versteht sich, dass das Ventilsystem 21 nicht nur für eine Ansteuerung des Aktors 2 sondern auch für die Ansteuerung des Aktors 52 oder eines nicht dargestellten Aktors, der zwei Arbeitsräume aufweist, eingesetzt werden kann. In analoger Weise gilt dies auch für das Ventilsystem 71.

## Patentansprüche

1. Ventilsystem (21; 71) zur Versorgung eines pneumatischen Aktors (2; 52), mit einem Versorgungsanschluss (22; 72), einem Abluftanschluss (23; 73), einem ersten Arbeitsanschluss (24; 74), dem ein erster Drucksensor (43; 63) zugeordnet ist, und einem zweiten Arbeitsanschluss (25; 75), dem ein zweiter Drucksensor (44; 64) zugeordnet ist, sowie mit einer ersten Ventilgruppe (31; 81), die mit dem Versorgungsanschluss (22; 72) und mit dem Abluftanschluss (23; 73) und mit dem ersten Arbeitsanschluss (24; 74) verbunden ist und die in einem ersten Funktionszustand einen Abluftpfad zwischen dem ersten Arbeitsanschluss (24; 74) und dem Abluftanschluss (23; 73) freigibt und die in einem zweiten Funktionszustand einen Versorgungspfad zwischen dem Versorgungsanschluss (22; 72) und dem ersten Arbeitsanschluss (24; 74) freigibt, sowie mit einer zweiten Ventilgruppe (32; 82), die mit dem Versorgungsanschluss (22; 72) und mit dem Abluftanschluss (23; 73) und mit dem zweiten Arbeitsanschluss (25; 75) verbunden ist und die in einem ersten Funktionszustand einen Abluftpfad zwischen dem zweiten Arbeitsanschluss (25; 75) und dem Abluftanschluss (23; 73) freigibt und die in einem zweiten Funktionszustand einen Versorgungspfad zwischen dem Versorgungsanschluss (22; 72) und dem zweiten Arbeitsanschluss (25; 75) freigibt, sowie mit einer Steuereinrichtung (28; 78), die zur Auswertung eines ersten Drucksignals des ersten Drucksensors (43; 63) ausgebildet ist und einen ersten Druckregler zur Ansteuerung der ersten Ventilgruppe (31; 81) aufweist und die zur Auswertung eines zweiten Drucksignals des zweiten Drucksensors (44; 64) ausgebildet ist und einen zweiten Druckregler zur Ansteuerung der zweiten Ventilgruppe (32; 82) aufweist und die für eine Einstellung eines ersten Maximaldruckniveaus für den ersten Druckregler und eines zweiten Maximaldruckniveaus für den zweiten Druckregler ausgebildet ist.

2. Ventilsystem (21; 71) nach Anspruch 1, **dadurch gekennzeichnet, dass** die Steuereinrichtung (28; 78) eine Sensorschnittstelle (46) zur Verbindung mit einem Positionssensor (18), der einem Aktor (2; 52) zugeordnet ist, aufweist und für eine Verarbeitung eines Positionssignals des Positionssensors (18) ausgebildet ist und dass die Steuereinrichtung (28: 78) einen Positionsregler aufweist, mit dem das Positionssignal für eine Aktorpositionsregelung verwendet werden kann.

3. Ventilsystem (21; 71) nach Anspruch 1, **dadurch gekennzeichnet, dass** die Steuereinrichtung (28; 78) für eine Auswertung des ersten Drucksignals des ersten Drucksensors (43; 63) und des zweiten Drucksignals des zweiten Drucksensors (44; 64) ausgebildet ist, um eine Positionsinformation für einen Aktor (2; 52) zu ermitteln, und dass die Steuereinrichtung (28; 78) einen Positionsregler aufweist, mit dem die Positionsinformation für eine Aktorpositionsregelung verwendet werden kann.

4. Ventilsystem (21; 71) nach Anspruch 1, 2 oder 3, **dadurch gekennzeichnet, dass** die Steuereinrichtung (28; 78) eine Kommunikationsschnittstelle (27: 77) aufweist, die für einen Empfang einer Bewegungsaufgabe von einer übergeordneten Maschinensteuerung ausgebildet ist, wobei die Steuereinrichtung (28; 78) für eine Verarbeitung der Bewegungsaufgabe ausgebildet ist, um aus der Bewegungsaufgabe wenigstens einen Parameter aus der Gruppe: erstes Maximaldruckniveau, zweites Maximaldruckniveau, Aktorpositionsabweichung, Aktorsollgeschwindigkeit, Aktorsollsteifigkeit, Aktorminimalgeschwindigkeit, Aktormaximalgeschwindigkeit, zu entnehmen und anhand des wenigstens einen Parameters das erste Maximaldruckniveau und das zweite Maximaldruckniveau zu bestimmen.

5. Ventilsystem (21; 71) nach einem der Ansprüche 1 bis 4, **dadurch gekennzeichnet, dass** die erste Ventilgruppe (31; 81) und die zweite Ventilgruppe (32; 82) jeweils als Piezoventile (83, 84, 85. 86), insbesondere Piezobiegerventile, oder Magnetventile oder fluidisch vorgesteuerte Ventile ausgebildet sind.

6. Ventilsystem (21; 71) nach einem der Ansprüche 1 bis 5, **dadurch gekennzeichnet, dass** die erste Ventilgruppe (31; 81) und die zweite Ventilgruppe (32; 82) jeweils als 3/2- Wegeventil oder als 3/3-Wegeventil ausgebildet ist oder dass die erste Ventilgruppe (31; 81) und die zweite Ventilgruppe (32; 82) jeweils zwei 2/2-Wegeventile umfassen und in einer Vollbrückenschaltung angeordnet sind.

7. Ventilsystem (21; 71) nach einem der Ansprüche 1 bis 6, **dadurch gekennzeichnet, dass** die Steuereinrichtung (28; 78) derart eingerichtet ist, dass das erste Maximaldruckniveau und das zweite Maximaldruckniveau aus einer Mittendruckoptimierung hervorgehen, die von der Steuereinrichtung (28; 78) anhand wenigstens einer Randbedingung aus der Gruppe: Aktorpositionsabweichung, Aktorsollgeschwindigkeit, Aktorsollsteifigkeit, Aktorminimalgeschwindigkeit, Aktormaximalgeschwindigkeit durchgeführt wird.

8. Verfahren zum Betreiben eines pneumatischen Aktors (2; 52), wobei der Aktor (2; 52) ein Aktorgehäuse (3; 53) mit einer Aktorausnehmung (4; 54) und einen beweglich, insbesondere linearbeweglich oder schwenkbeweglich, längs eines Bewegungswegs (7; 57) in der Aktorausnehmung (4; 54) aufgenommenen Arbeitskolben (5; 55) umfasst, wobei der Arbeitskolben (5; 55) die Aktorausnehmung (4; 54) in einen größenvariablen ersten Arbeitsraum (8; 58) und in einen größenvariablen zweiten Arbeitsraum (9; 59) unterteilt, mit den Schritten: Ermitteln eines ersten Arbeitsdrucks im ersten Arbeitsraum (8; 58), Ermitteln eines zweiten Arbeitsdrucks im zweiten Arbeitsraum (9; 59), Ermitteln einer Istposition des Arbeitskolbens (5; 55) längs des Bewegungswegs, Empfangen einer Bewegungsaufgabe und Ermitteln wenigstens eines Parameters aus der Gruppe: Aktorsollsteifigkeit, Aktorstörsteifigkeit, Aktorminimalgeschwindigkeit, Aktormaximalgeschwindigkeit, Aktorpositioniergenauigkeit, aus der vom Arbeitskolben (5; 55) durchzuführenden Bewegungsaufgabe, Ermitteln eines von dem wenigstens einen Parameter abhängigen ersten Maximaldruckniveaus für den ersten Arbeitsraum (8; 58), Ermitteln eines von dem wenigstens einen Parameter abhängigen zweiten Maximaldruckniveaus für den zweiten Arbeitsraum (9; 59), Durchführen einer ersten Druckregelung für den ersten Arbeitsraum (8; 58) mit dem ersten Maximaldruckniveau, Durchführen einer zweiten Druckregelung für den zweiten Arbeitsraum (9; 59) mit dem ersten Maximaldruckniveau, um die Bewegungsaufgabe für den Arbeitskolben (5; 55) durchzuführen.

9. Verfahren nach Anspruch 8, **dadurch gekennzeichnet, dass** während der Durchführung der Bewegungsaufgabe für den Arbeitskolben (5; 55) anhand eines Verlaufs des ersten Arbeitsdrucks und anhand eines Verlaufs des zweiten Arbeitsdrucks eine Istposition des Arbeitskolbens (5; 55) ermittelt wird und dass mit der Istposition und einer aus der Bewegungsaufgabe berechneten Sollposition für den Arbeitskolben (5; 55) eine Positionsregelung unter Berücksichtigung des ersten Maximaldruckniveaus und des zweiten Maximaldruckniveaus durchgeführt wird.

10. Verfahren nach Anspruch 8, **dadurch gekennzeichnet, dass** während der Durchführung der Bewegungsaufgabe für den Arbeitskolben (5; 55) eine Istposition des Arbeitskolbens (5; 55) anhand eines Positionssignals eines dem Aktor (2; 52) zugehörigen Positionssensors ()18 ermittelt wird und dass mit der Istposition und einer aus der Bewegungsaufgabe berechneten Sollposition für den Arbeitskolben (5; 55) eine Positionsregelung unter Berücksichtigung des ersten Maximaldruckniveaus und des zweiten Maximaldruckniveaus durchgeführt wird.

11. Verfahren nach Anspruch 8, 9 oder 10, **dadurch gekennzeichnet, dass** die Bewegungsaufgabe eine Veränderung des wenigstens einen Parameters in Abhängigkeit von einer Positionsänderung des Arbeitskolbens (5; 55) enthält und dass eine Anpassung des ersten Maximaldruckniveaus und des zweiten Maximaldruckniveaus in Abhängigkeit von der Positionsänderung des Arbeitskolbens (5; 55) durchgeführt wird.

12. Verfahren nach einem der Ansprüche 8 bis 11, **dadurch gekennzeichnet, dass** das erste Maximaldruckniveau und das zweite Maximaldruckniveau aus einer Mittendruckoptimierung hervorgehen, die von der Steuereinrichtung (28; 78) anhand wenigstens einer Randbedingung aus der Gruppe: Aktorpositionsabweichung, Aktorsollgeschwindigkeit, Aktorsollsteifigkeit, Aktorminimalgeschwindigkeit, Aktormaximalgeschwindigkeit durchgeführt wird.
